Europäisches Patentamt

European Patent Office

Office européen des brevets

(19)

(11) Numéro de publication: **0 065 913**
**B1**

(12) **FASCICULE DE BREVET EUROPEEN**

(45) Date de publication du fascicule du brevet:
20.03.85

(21) Numéro de dépôt: **82400885.8**

(22) Date de dépôt: **12.05.82**

(51) Int. Cl.⁴: **B 60 S 1/34**

(54) **Essuie-glace pour pare-brise rabattable.**

(30) Priorité: **20.05.81 FR 8110031**

(43) Date de publication de la demande:
**01.12.82 Bulletin 82/48**

(45) Mention de la délivrance du brevet:
**20.03.85 Bulletin 85/12**

(84) Etats contractants désignés:
**DE FR GB IT**

(56) Documents cités:
**FR - A - 1 329 420**
**FR - A - 2 007 516**
**FR - A - 2 440 841**
**GB - A - 524 720**
**US - A - 1 674 657**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Cognard, Georges, 8 Rue Jean Baillet, F-92500 Rueil Malmaison (FR)**
Inventeur: **Leger, André, 56 Rue Louise Michel, F-78500 Sartrouville (FR)**

(74) Mandataire: **Bressand, Georges et al, c/o CABINET LAVOIX 2 Place d'Estienne d'Orves, F-75441 Paris Cedex 09 (FR)**

## Description

La présente invention se rapporte à un essuie-glace pour pare-brise de véhicule rabattable vers l'avant contre le capot avant du véhicule autour d'un axe transversal situé à sa base, du type comprenant un bras porte-râclette qui est à peu près horizontal en position de repos de l'essuie-glace et qui est articulé, à son extrémité opposée à la râclette, sur un support solidaire d'un arbre oscillant. L'invention s'applique, par exemple, à certains véhicules automobiles dits tout terrain.

Sur les véhicules équipés d'un pare-brise rabattable, il est habituellement nécessaire d'intervenir manuellement sur les essuie-glace pour les placer dans une position qui permette de rabattre le pare-brise. A défaut de cette intervention, il existe un risque importante de détérioration des essuie-glace.

Une solution connue pour éviter cette manipulation consiste à placer l'axe d'articulation du pare-brise sensiblement dans l'alignement des râclettes d'essuie-glace lorsque ceux-ci sont en position de repos. Cette solution, qui fait l'objet du brevet FR-A-2 440 841 déposé par les Demanderesses, présente l'inconvénient de placer cet axe d'articulation à un niveau relativement élevé, ce qui a pour effet de réduire le champ de vision lorsque le pare-brise est rabattu.

L'invention a pour but de fournir un moyen particulièrement simple pour, à la fois, éviter toute manipulation des essuie-glace avant de rabattre le pare-brise et dégager le champ de vision lorsque le pare-brise a été rabattu.

A cet effet, l'invention a pour objet un essuie-glace du type précité, caractérisé en ce que le bras est coudé de façon que, dans la position de repos de l'essuie-glace, l'axe d'articulation de ce bras sur son support soit sensiblement parallèle à l'axe d'articulation du pare-brise.

De préférence, les deux axes d'articulation sont sensiblement confondus dans la position de repos de l'essuie-glace.

Un exemple de réalisation fait l'objet de la description qui suit, en référence aux dessins annexés dans lesquels:

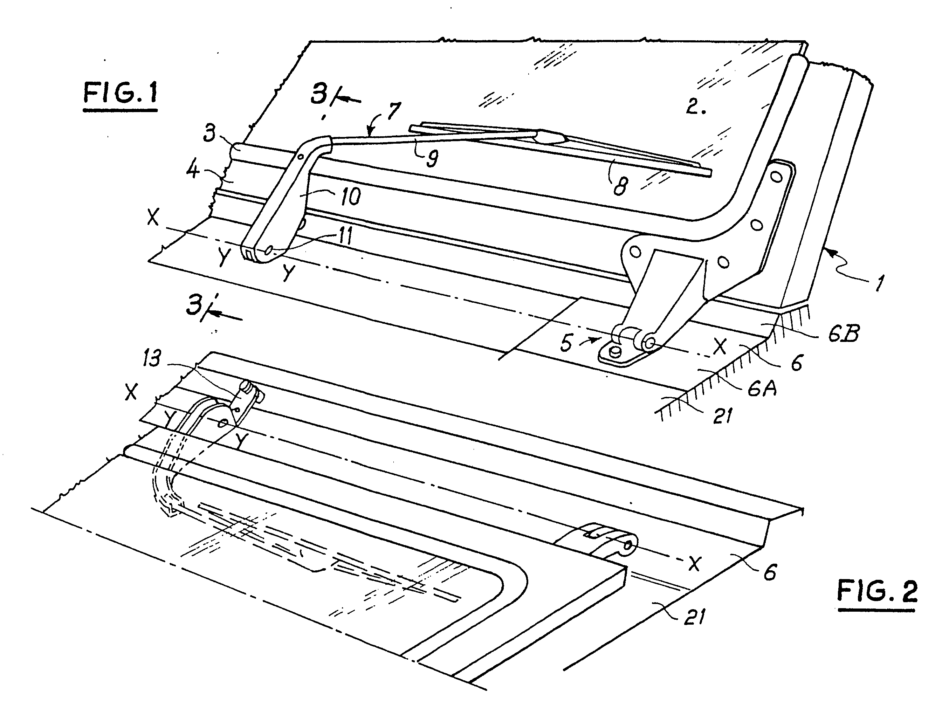

la fig. 1 est une vue en perspective montrant un essuie-glace suivant l'invention en position de repos sur un pare-brise relevé;

la fig. 2 est une vue analogue, le pare-brise étant rabattu;

la fig. 3 est une coupe verticale, prise suivant la ligne 3-3 de la fig. 1, qui montre le montage du bras de l'essuie-glace.

On voit sur les dessins une partie d'un pare-brise rabattable 1 qui est constitué par une vitre 2 maintenue à l'aide d'un joint périphérique 3 dans un cadre 4. Ce cadre est articulé par sa base autour d'un axe transversal X-X sur des charnières 5 dont une aile est fixée sur la partie avant à peu près horizontale 6A d'un panneau d'auvent 6 du véhicule considéré.

Le nettoyage de la vitre 2 est assuré par au moins un essuie-glace 7 comprenant une râclette 8 montée à l'extrémité d'un bras oscillant 9.

L'extrémité du bras 9 opposée à la râclette 8 est coudée et forme une chape 10 articulée sur un axe 11 qui relie les deux branches parallèles 12 d'un support 13, la chape 10 chevauchant les deux branches 12. Le support 13 est coudé et fixé, de façon classique, à l'aide d'un écrou 14 sur l'extrémité d'un arbre 15 qui traverse la partie arrière montante 6B du panneau d'auvent 6 dans un palier 16. L'arbre 15 est entraîné dans un mouvement de rotation alternative par un mécanisme habituel dont on n'a représenté qu'un bras de manivelle 17.

Lorsque l'essuie-glace 7 est dans sa position de repos illustrée aux dessins, la partie principale du bras 9 est à peu près horizontale, tandis que le plan moyen de la chape 10 est sensiblement perpendiculaire à l'axe X-X d'articulation du pare-brise, et l'axe 11 d'articulation du bras 9 possède un axe géométrique Y-Y sensiblement confondu avec cet axe X-X.

Un ressort hélicoïdal de traction 18, disposé à l'intérieur de la chape 10, est accroché par son extrémité supérieure sur un crochet 19 du bras 9 prévu au sommet de la chape 10 et, par son extrémité inférieure, sur un axe 20 disposé entre les deux branches 12 du support 13, derrière l'axe 11. Ainsi, lorsque le pare-brise est relevé, la ligne d'action du ressort 18, qui joint le crochet 19 à l'axe 20, passe entre l'axe 11 d'articulation de la chape 10 et le pare-brise 1, de sorte que ce ressort sollicite la râclette 8 vers la vitre 2 et assure par conséquent le maintien de cette râclette sur cette vitre.

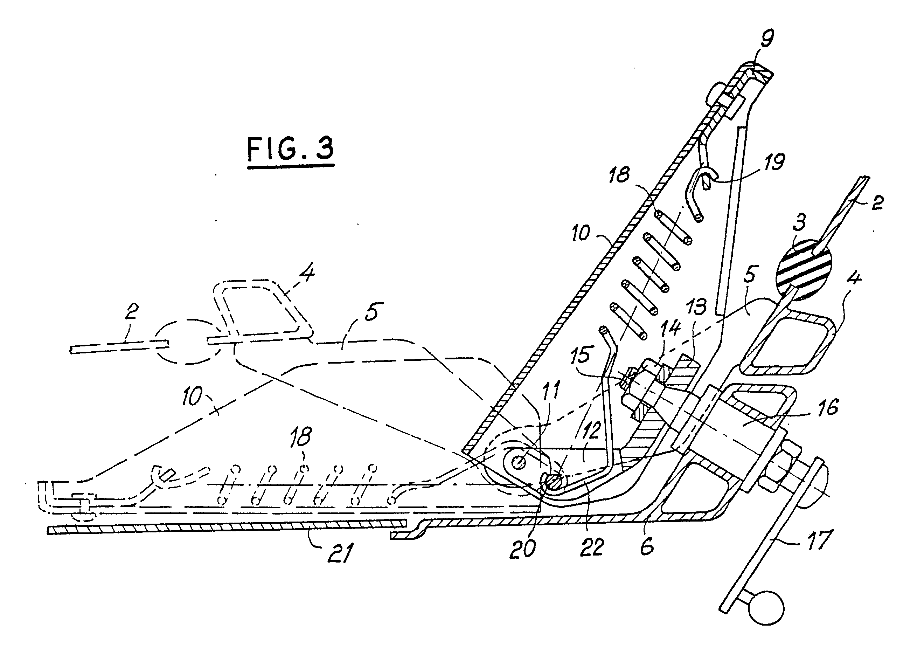

La fig. 3 représente en traits mixtes la position qu'occupe le pare-brise 1 après rabattement vers l'avant contre le capot avant 21 du véhicule par basculement autour de l'axe X-X.

Dans son mouvement de la position relevée à la position rabattue, le pare-brise 1 entraîne l'essuie-glace 7, dont l'axe Y-Y de basculement coïncide avec celui X-X du pare-brise, sans mouvement relatif entre eux, si bien qu'aucune précaution n'est à prendre avec l'essuie-glace avant d'opérer cette transformation.

En fait, il n'est pas nécessaire que les deux axes d'articulation coïncident exactement, mais il suffit qu'ils soient sensiblement parallèles entre eux. S'ils sont décalés l'un par rapport à l'autre, il se produit simplement un déplacement de la râclette 8 de long de la surface de la vitre 2 au cours du rabattement.

Dans la position pare-brise rabattu, telle que représentée en traits mixtes sur la fig. 3, la ligne d'action du ressort 18 passe entre l'axe 11 d'articulation de la chape 10 et le capot 21. Le franchissement de l'axe X-X par cette ligne d'action est rendu possible par un coude 22 prévu à la partie inférieure du ressort, coude qui vient chevaucher sans contact l'axe 11 lorsque le pare-brise est rabattu. Il résulte de ceci que l'essuie-glace 7 est alors appliqué par le ressort 18 contre le capot 21 et que la râclette 8 ne reste pas pressée contre la vitre 2. Cet agencement procure, comme sur les essuie-glace usuels, une position stable pour laquelle l'essuie-glace reste éloigné du pare-brise relevé. Il nécessite de ramener l'essuie-glace à la main lorsque le pare-brise a été relevé.

Dans une variante de réalisation, on peut déplacer la position de l'axe 20 d'accrochage du ressort 18 sur le support 13 pour que, dans la position rabattue, la ligne d'action du ressort 18 passe au-dessus de l'axe 11. Dans ces conditions, la râclette 8 reste toujours pressée contre la vitre 2 et l'essuie-glace 7 se relève de lui-même, en suivant le pare-brise 1, lorsqu'on relève celui-ci. Par contre, l'essuie-glace ne possède plus qu'une seule position stable, à savoir celle dans laquelle il est appliqué sur la vitre 2.

Dans l'exemple représenté, le ressort 18 passe dans le prolongement de l'arbre 15, ce qui conduit à un certain encombrement de la chape 10 dans la direction perpendiculaire au pare-brise. Selon une variante non représentée, on peut faire passer le ressort 18 à côté de l'écrou 14 ou l'accrocher sur un étrier intermédiaire chevauchant l'écrou 14. Dans ce cas, la chape 10 est légèrement plus large, suivant une direction parallèle au pare-brise, mais elle est moins proéminente dans la direction perpendiculaire au pare-brise.

## Revendications

1. Essuie-glace pour pare-brise (1) de véhicule rabattable vers l'avant contre le capot avant (21) du véhicule, autour d'un axe transversal (X-X) situé à la base du pare-brise, comprenant un bras (9) porte-râclette qui est à peu près horizontal en position de repos de l'essuie-glace et qui est articulé, à son extrémité opposée à la râclette (8), sur un support (13) solidaire d'un arbre oscillant (15), caractérisé en ce que le bras (9) est coudé de façon que, dans la position de repos de l'essuie-glace, l'axe (Y-Y) d'articulation de ce bras sur son support (13) soit sensiblement parallèle à l'axe (X-X) d'articulation du pare-brise (1).

2. Essuie-glace suivant la revendication 1, caractérisé en ce que, dans sa position de repos, les deux axes d'articulation (X-X, Y-Y) sont sensiblement confondus.

3. Essuie-glace suivant l'une des revendications 1 et 2, caractérisé en ce qu'il comporte un ressort (18) qui le sollicite vers le pare-brise (1) lorsque ce dernier est relevé et vers le capot avant (21) lorsque le pare-brise est rabattu.

4. Essuie-glace suivant l'une des revendications 1 et 2, caractérisé en ce qu'il comporte un ressort (18) qui le sollicite constamment vers le pare-brise (1), que ce dernier soit relevé ou rabattu.

5. Essuie-glace suivant l'une des revendications 3 et 4, caractérisé en ce que le ressort (18) passe dans le prolongement de l'arbre oscillant (15).

6. Essuie-glace suivant l'une des revendications 3 et 4, caractérisé en ce que le ressort (18) passe à côté de l'arbre oscillant (15).

7. Essuie-glace suivant l'une des revendications 3 et 4, caractérisé en ce que le ressort (18) est accroché par son extrémité inférieure à un étrier qui chevauche de l'arbre oscillant (15).

## Claims

1. A wiper for a windscreen (1) of a vehicle, which windscreen is capable of being swung over forwardly onto the front bonnet (21) of the vehicle about a transverse axis (X-X) located at the base of the windscreen, comprising a wiper blade-carrying arm (9) which is roughly horizontal in the position of rest of the wiper and is pivotally mounted at its end opposed to the wiper blade (8) on a support (13) rigid with an oscillating shaft (15), characterised in that the arm (9) is so bent that, in the position of rest of the wiper, the pivot axis (Y-Y) of this arm on its support (13) is substantially parallel to the pivot axis (X-X) of the windscreen (1).

2. A wiper according to claim 1, characterised in that, in its position of rest, the two pivot axes (X-X, Y-Y) are substantially coincident.

3. A wiper according to one of the claims 1 and 2, characterised in that it comprises a spring (18) which biases it toward the windscreen (1) when the latter is raised and toward the front bonnet (21) when the windscreen is swung down.

4. A wiper according to one of the claims 1 and 2, characterised in that it comprises a spring (18) which constantly biases it toward the windscreen (1), whether the latter be raised or swung down.

5. A wiper according to one of the claims 3 and 4, characterised in that the spring (18) passes through the extension of the oscillating shaft (15).

6. A wiper according to one of the claims 3 and 4, characterised in that the spring (18) passes to one side of the oscillating shaft (15).

7. A wiper according to one of the claims 3 and 4, characterised in that the spring (18) is hooked by its lower end to a bracket which straddles the oscillating shaft (15).

## Patentansprüche

1. Scheibenwischer für eine Fahrzeugwindschutzscheibe (1), die auf die vordere Haube (21) des Fahrzeugs um eine Querachse (X-X) umklappbar ist, die sich an der Basis der Windschutzscheibe befindet, mit einem Wischblatttragarm (9), der in Ruhestellung des Scheibenwischers ungefähr waagrecht und an seinem dem Wischblatt (8) entgegengesetzten Ende an einem mit einer Schwenkwelle (15) fest verbundenen Träger (13) angelenkt ist, dadurch gekennzeichnet, dass der Arm (9) derart abgewinkelt ist, dass in der Ruhestellung des Scheibenwischers die Anlenkachse (Y-Y) dieses Arms an seinem Träger (13) im wesentlichen parallel zur Anlenkachse (Y-Y) der Windschutzscheibe (1) ist.

2. Scheibenwischer nach Anspruch 1, dadurch gekennzeichnet, dass in seiner Ruhestellung die beiden Anlenkachsen (X-X, Y-Y) im wesentlichen zusammenfallen.

3. Scheibenwischer nach einem der Ansprüche 1 und 2, gekennzeichnet durch eine Feder (18), die ihn zur Windschutzscheibe (1) drückt, wenn letztere angehoben ist, und ihn zur vorderen Haube (21) drückt, wenn die Windschutzscheibe umgeklappt ist.

4. Scheibenwischer nach einem der Ansprüche 1 und 2, gekennzeichnet durch eine Feder (18), die ihn zur Windschutzscheibe (1) drückt, unabhängig davon, ob letztere angehoben oder umgeklappt ist.

5. Scheibenwischer nach einem der Ansprüche 3 und 4, dadurch gekennzeichnet, dass die Feder (18) sich in der Verlängerung der Schwenkwelle (15) erstreckt.

6. Scheibenwischer nach einem der Ansprüche 3 und 4, dadurch gekennzeichnet, dass die Feder (18) sich seitlich von der Schwenkwelle (15) erstreckt.

7. Scheibenwischer nach einem der Ansprüche 3 und 4, dadurch gekennzeichnet, dass die Feder (18) mit ihrem unteren Ende an einem die Schwenkwelle (15) übergreifenden Bügel befestigt ist.

**FIG.1**

**FIG.2**

0 065 913

FIG. 3

0 065 913